# FASCICULE DE BREVET EUROPEEN

(11) **EP 1 322 148 B1**
(45) Date de publication et mention de la délivrance du brevet: **05.09.2012**
(21) Numéro de dépôt: 01974433.3
(22) Date de dépôt: 04.10.2001
(51) Int. Cl.: A01G 17/08

(54) **APPAREIL POUR LA POSE AUTOMATIQUE DE LIENS TORSADES**
VORRICHTUNG FÜR DIE SELBSTTÄTIGE ANLAGE VON VERDRILLTEN BÄNDERN
APPARATUS FOR AUTOMATIC LAYING OF WIRE TIES

(30) Priorité: 04.10.2000 FR 0012681
(43) Date de publication de la demande: 02.07.2003
(73) Titulaire: Mage Application, 38640 Claix (FR)
(72) Inventeur: DOMBRAY, Freddy, 73360 Les Échelles (FR)
(74) Mandataire: Maureau, Philippe
(86) Numéro de dépôt international: PCT/FR2001/003065
(87) Numéro de publication internationale: WO 2002/028167

(56) Documents cités:
- FR-A- 2 738 456
- FR-A- 2 780 702

## Description

La présente invention a pour objet un appareil de la pose automatique de liens torsadés, par exemple pour l'attache de sarments de vigne ou de branches de plantes sur des supports tels que des piquets ou des fils de palissage.

Cet appareil peut également être utilisé pour des applications autres, et notamment des applications industrielles, nécessitant le liage de deux pièces de faible section et notamment de pièces filiformes.

Dans le domaine agricole, il est souvent nécessaire d'attacher une plante à un support, pour la guider au fur et à mesure de sa croissance. C'est ainsi notamment qu'il est connu d'attacher les sarments de vigne, généralement à des fils horizontaux appelés fils de palissage. Si cette opération est effectuée manuellement, elle est longue et fastidieuse puisqu'il faut découper des tronçons de fils à partir d'une bobine, entourer le sarment à attacher ainsi que le fil sur lequel il faut l'attacher, puis réaliser la torsade de la boucle ainsi formée pour assurer la fermeture de celle-ci.

Pour faciliter et accélérer cette opération de liage, il a été imaginé de réaliser des appareils assurant une pose automatique, c'est-à-dire comportant un corps équipé de moyens d'alimentation en fil continu, d'amenée de ce fil à un bec courbe pouvant être refermé sur lui-même pour entourer l'objet ou similaire autour duquel le lien doit être torsadé, le corps étant équipé d'un torsadeur entraîné en rotation au cours de l'opération de torsade et d'un dispositif de coupe du fil pour former un lien. Un tel appareil est décrit dans le document FR-2 738 456. Cet appareil comprend un seul moteur assurant les différentes fonctions d'amenée du fil de fermeture du bec, de coupe d'un lien et de torsade du lien. Toutefois, le mécanisme mis en oeuvre est complexe, et la puissance disponible pour chaque opération n'est pas toujours suffisante compte tenu de la mise en oeuvre d'un seul moteur.

Le document FR 2 780 702 concerne un appareil comportant les caractéristiques de la partie générique de la revendication 1.

Le but de l'invention est de fournir un appareil pour la pose automatique de liens torsadés, possédant une excellente fiabilité et une puissance importante pour la réalisation des différentes fonctions.

A cet effet, l'appareil qu'elle concerne, du type connu par le document FR 2 780 702, est caractérisé en ce que le second moteur est également destiné à entraîner le dispositif de coupe du fil, des moyens de commande étant prévus pour successivement commander l'entraînement du fil et la fermeture du bec de guidage de celui-ci par l'intermédiaire du premier moteur, puis, le premier moteur étant arrêté, l'entraînement simultané du dispositif de coupe du fil et du torsadeur à l'aide du second moteur, et enfin, après arrêt du second moteur, l'ouverture du bec de guidage et l'amenée de fil à ce dernier.

Cet appareil comporte donc deux moteurs électriques, un premier moteur destiné à réaliser simultanément l'entraînement du fil et la fermeture du bec de guidage en entourant l'objet à fixer, et, dans un second temps et après torsade du lien, la réouverture du bec et l'amenée de fil jusqu'au niveau de celui-ci. Le second moteur, fonctionnant après la fermeture du bec de guidage du fil, assure la coupe et la torsade du fil autour de l'objet à attacher.

Suivant une caractéristique avantageuse de l'invention, le bec de guidage du fil comprend une première partie fixe et solidaire du corps formant un crochet ouvert se terminant par une zone en forme d'arc de cercle dans laquelle est montée, de façon coulissante et guidée, une seconde partie déplaçable entre une première position dans laquelle la seconde partie est escamotée dans la première partie du bec, correspondant à une position d'ouverture de celui-ci, et une seconde position dans laquelle la seconde partie prolonge la première partie du bec pour former une boucle fermée encerclant l'objet ou similaire autour duquel le lien doit être torsadé, une gorge étant ménagée sur la face intérieure des première et seconde parties du bec pour assurer le guidage du fil jusqu'au torsadeur, après formation d'une boucle.

Il peut être noté que, contrairement aux appareils connus, la fermeture du bec autour de l'objet à attacher n'est pas réalisée par pivotement d'une partie mobile, mais par coulissement de la partie mobile dans la partie fixe pour réaliser un mouvement d'encerclement. De ce fait, ce bec peut convenir pour attacher des objets de diamètre relativement important, par exemple jusqu'à 30 mm, tout en s'adaptant au diamètre de l'objet à lier, l'attache se faisant sans serrage excessif et sans meurtrir l'objet, ce qui est particulièrement important dans le cas de végétaux.

Afin de réaliser le déplacement de la partie mobile ou seconde partie du bec, à l'extrémité de la seconde partie du bec demeurant guidée dans la première partie du bec, en position fermée de celui-ci, est articulée une extrémité d'une première bielle disposée longitudinalement au corps de l'appareil, et dont l'autre extrémité est articulée sur une seconde bielle également articulée sur le corps et soumise à l'action d'un ressort, tendant à la faire pivoter et à déplacer la première bielle dans un sens de fermeture du bec.

Afin de commander le mouvement de pivotement de la seconde bielle sous l'action d'un ressort, sur le corps est montée pivotante autour d'un axe parallèle à l'axe d'articulation de la seconde bielle sur le corps, une roue qui, entraînée en rotation par le premier moteur, est équipée sur l'une de ses faces, d'une came prenant appui contre la seconde bielle pour commander le pivotement de celle-ci et par suite les mouvements d'ouverture et de fermeture du bec.

Sur la roue est calé un premier pignon d'entraînement en rotation à partir d'un moteur électrique et un second pignon entraînant un pignon sur lequel est calé un galet d'entraînement du fil, le fil passant entre le galet d'entraînement et un galet d'axe parallèle, libre en rotation et soumis à l'action d'un ressort de compression, jouant le rôle de galet presseur. Il existe une position de débrayage, notamment pendant une période de non utilisation prolongée de l'appareil, permettant de libérer le ressort de compression et d'éviter le contact entre les deux galets, le galet d'entraînement et le galet presseur pour éviter les risques de déformation dus à un appui prolongé.

Suivant une forme d'exécution de cet appareil, sur l'extrémité du corps opposée à celle équipée du bec, est monté axialement un premier moteur électrique dont l'arbre de sortie entraîne, par un couple d'engrenages droits, un arbre longitudinal équipé d'une vis sans fin engrenant avec un pignon calé sur la roue. La transmission par une vis sans fin assure un entraînement du fil plus doux et une plus grande fiabilité mécanique qu'avec la mise en oeuvre de roues dentées.

Selon une autre caractéristique de l'invention, sur la partie du corps située du côté du bec, est monté pivotant autour d'un axe orienté dans l'axe du corps, c'est-à-dire perpendiculaire à l'ouverture du bec, un arbre sur lequel sont fixés le torsadeur et un dispositif de coupe, le torsadeur étant situé du côté du bec et le dispositif de coupe étant situé du côté de l'intérieur du corps.

Avantageusement, le torsadeur est constitué par deux branches cintrées et opposées en forme d'hélice et le dispositif de coupe est formé par deux lames diamétralement opposées, dont les arêtes de coupe sont situées, dans le sens de rotation du torsadeur et du dispositif de coupe, en avant des bords correspondants des branches du torsadeur. Lors de la mise en fonctionnement du second moteur, une lame du dispositif de coupe étant située en avant, dans le sens de rotation, du bord correspondant d'une branche du torsadeur, il est procédé à la coupure du fil pour former le lien, avant le début du torsadage. En outre, la forme du torsadeur est particulièrement adaptée pour obtenir une attache ne procurant pas un serrage excessif, ce qui est avantageux dans le cas de végétaux.

Suivant une caractéristique de l'invention, le second moteur électrique est monté sur le corps, dans la zone centrale de celui-ci et entraîne le torsadeur et le dispositif de coupe par deux couples d'engrenages droits.

Avantageusement, cet appareil possède une carte électronique de commande des moteurs électriques recevant des informations de trois capteurs à effet Hall dont deux sont actionnés par un aimant fixé sur la roue équipée d'une came et commandent respectivement l'arrêt du premier moteur et la mise en fonctionnement du second moteur, après fermeture du bec et l'arrêt du premier moteur en fin du mouvement d'ouverture du bec, et dont le troisième est actionné par un aimant fixé sur un engrenage d'entraînement de l'arbre du torsadeur et du dispositif de coupe et commande, en fin d'opération de torsadage, l'arrêt du second moteur et la mise en fonctionnement du premier moteur.

Il doit être noté, qu'en fin d'opération de torsadage, l'arrêt du second moteur assure le positionnement de l'arbre portant le dispositif de coupe et le torsadeur, de telle sorte que l'arête coupante d'une lame soit située en avant, dans le sens de la rotation, du bord correspondant du torsadeur.

Avantageusement, cet appareil comporte un sélecteur déterminant le nombre de tours du torsadeur au cours d'une opération de torsadage. L'opérateur définit, à l'aide du sélecteur, le nombre de tours nécessaires à réaliser la torsade du lien, puis exerce une pression sur un bouton de contact qui déclenche la succession d'opérations réalisant le liage.

Compte tenu de l'agencement des différents organes le constituant, l'appareil possède une forme générale allongée et se présente sous la forme d'un bâton. Cette forme est particulièrement ergonomique car limitant, en condition d'utilisation, les mouvements du poignet, et évitant ainsi les problèmes de traumatisme de la main et de l'avant-bras.

Selon une autre caractéristique de l'invention, cet appareil comprend une double gaine d'amenée du fil de liage et de l'énergie électrique pour les moteurs. Cet agencement permet l'utilisation de l'appareil quelles que soient les conditions climatiques car le fil est protégé de l'humidité. En outre, l'opération de palissage est facilité car le fil est amené de façon positive et non tiré par l'utilisateur. Cette protection du fil évite l'entortillement du fil de liage et des fils d'amenée d'énergie ainsi que l'accrochage du fil dans les branches. Enfin, cet agencement protège la machine vis-à-vis de l'introduction de matériaux tels que terre, poussière, bois, feuille, qui risqueraient d'être accrochés aux fils, ce qui augmente la fiabilité et la durée de vie de l'appareil.

Suivant une autre caractéristique de cet appareil, celui-ci comprend un dispositif de reconnaissance du fil utilisé, empêchant le fonctionnement de l'appareil si le fil n'est pas reconnu comme compatible avec le fonctionnement de l'appareil. Cette reconnaissance du fil utilisé évite la mise en oeuvre de fils qui ne seraient pas adaptés à l'appareil et qui nuiraient à son fonctionnement, voire risqueraient de le détériorer.

De toute façon, l'invention sera bien comprise à l'aide de la description qui suit, en référence au dessin schématique annexé représentant, à titre d'exemple non limitatif, une forme d'exécution de cet appareil :
Figure 1 est une vue en perspective des principales pièces constitutives de cet appareil en vue éclatée, le capot de recouvrement de ces différentes pièces n'étant pas représenté ;
Figure 2 est une vue de face de l'arbre portant le torsadeur et le dispositif de coupe du fil ;
Figure 3 est une vue en coupe longitudinale de ce même arbre selon la ligne III-III de figure 2 ;
Figure 4 est une vue de détail d'une carte portant des capteurs ;
Figures 5 et 6 sont deux vues de côté de l'appareil en position ouverte, après engagement sur un objet à lier à un support ;
Figures 7 et 8 sont deux vues de côté similaires à figures 5 et 6 respectivement après fermeture du bec et avant l'opération de torsade ;
Figures 9 et 10 sont deux vues de côté similaires à figure 8 respectivement au cours de l'opération de torsade, après cette opération et après ouverture du bec.

L'appareil selon l'invention comporte un corps 2 sur la partie avant duquel est monté un sous-ensemble comportant un bec 3 destiné à entourer l'objet à attacher ainsi que le support sur lequel cet objet doit être attaché, et sur la partie arrière duquel sont fixés un moteur 4 ainsi qu'une carte électronique 5. L'ensemble possède donc une forme allongée destinée à être recouvert par un capot présentant une forme générale de bâton qui est particulièrement ergonomique pour l'utilisateur. Le fil de liage 6 est approvisionné en continu depuis l'arrière du corps, traverse le corps en étant entraîné au niveau de celui-ci, et est amené au niveau du bec.

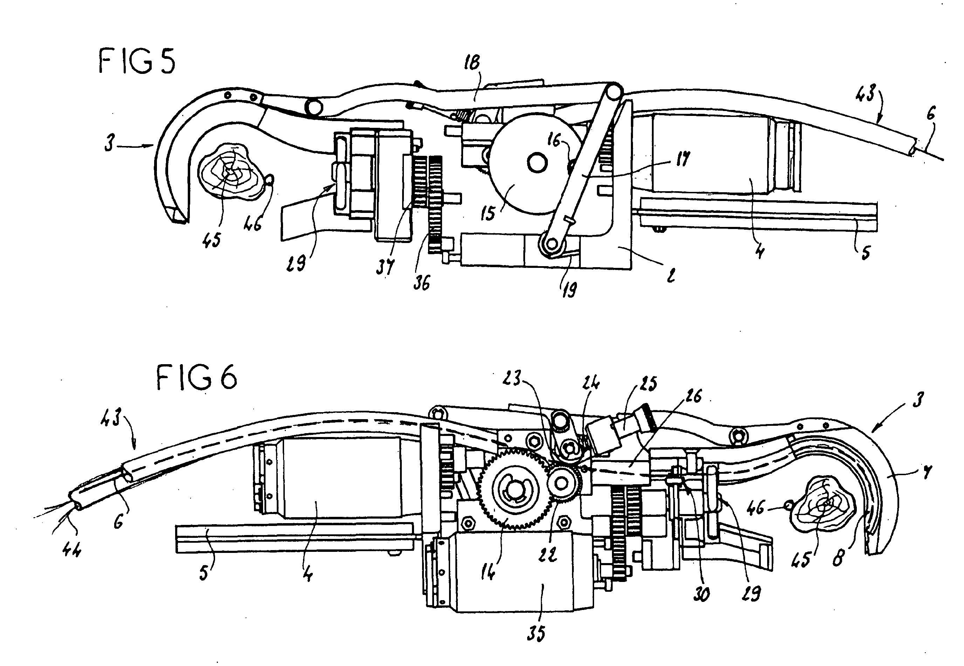

Le bec de guidage du fil comprend une première partie 7 fixe et solidaire du corps formant un crochet ouvert se terminant par une zone en forme d'arc de cercle, dans laquelle est montée de façon coulissante et guidée selon cet arc de cercle une seconde partie 8 déplaçable entre une première position, dans laquelle la seconde partie 8 est escamotée dans la première partie 7 du bec, correspondant à une position d'ouverture représentée notamment aux figures 5 et 6, et une seconde position, dans laquelle la seconde partie 8 prolonge la première partie 7 du bec pour former une boucle fermée encerclant l'objet ou similaire autour duquel le lien doit être torsadé. Une gorge, non représentée au dessin, est ménagée sur la face intérieure des première et seconde parties 7, 8 du bec 3 pour assurer le guidage du fil 6 jusqu'au torsadeur, après formation d'une boucle.

Le premier moteur 4 entraîne, par l'intermédiaire d'un couple d'engrenage 9, 10, un arbre longitudinal 12 équipé d'une vis sans fin 13. Cet arbre 12 est monté pivotant dans des paliers ménagés dans le corps 2. La vis sans fin 13 engrène avec un pignon 14. Sur ce pignon 14 est calée une roue 15 équipée d'une came 16. Sur le corps est articulée, autour d'un axe parallèle à celui de la roue et par une de ses extrémités, une bielle 17 sur l'autre extrémité de laquelle est articulée une extrémité d'une bielle 18 dont l'autre extrémité est articulée sur la seconde partie 8 du bec 3. Un ressort de torsion 19 agit sur la bielle 17 et, par suite, sur la bielle 18 pour provoquer la fermeture du bec 3. La came 16 de la roue 15 coopère avec la bielle 17 pour contrôler le mouvement de basculement de celle-ci vers la position de fermeture du bec, et pour ramener la bielle 17 en position d'ouverture du bec.

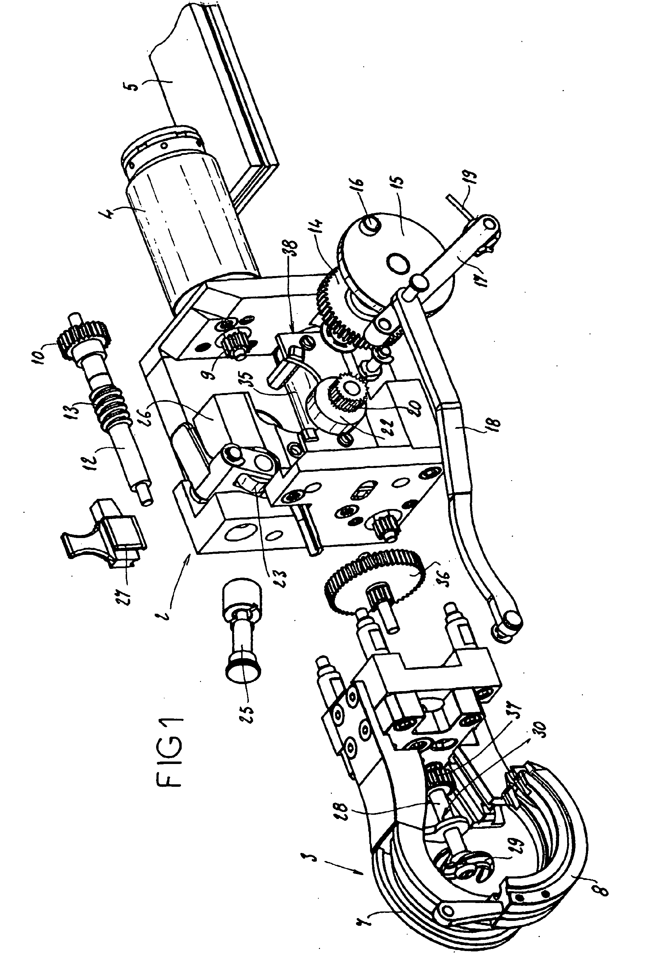

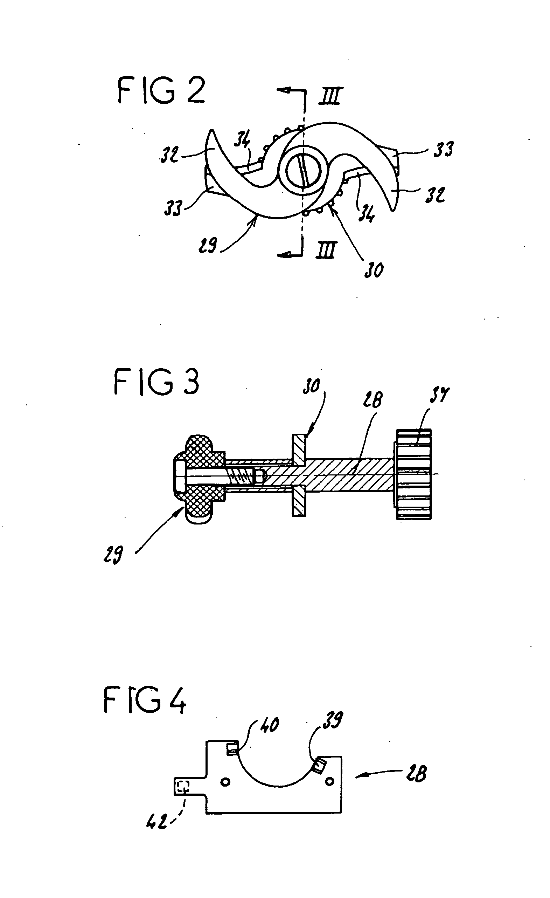

Le pignon 14 engrène avec un pignon 20, sur lequel est calé un galet 22 d'entraînement du fil 6. Le fil passe entre le galet d'entraînement 22 et un galet presseur 23 soumis à l'action d'un ressort de compression 24. Il existe un dispositif de débrayage 25 permettant, en conditions de non utilisation prolongée de l'appareil, de débrayer l'appui du galet presseur 23 contre le galet d'entraînement 22, afin d'éviter de marquer les deux galets par un appui ponctuel prolongé de l'un sur l'autre. Comme montré notamment à la figure 1, le corps est équipé d'un guide-fil 26, le passage du fil étant accessible à l'aide d'une trappe d'intervention 27. A l'avant du corps 2 est monté axialement, c'est-à-dire perpendiculairement à l'ouverture du bec, un arbre 28 sur lequel sont calés un torsadeur 29 ainsi qu'un dispositif 30 de coupe du fil. Comme montré notamment à la figure 2, le torsadeur 29 est constitué par deux branches 32 cintrées et opposées, en forme d'hélice, et le dispositif de coupe est formé par deux lames 33 diamétralement opposées, dont les arêtes de coupe 34 sont situées, dans le sens de rotation du torsadeur et du dispositif de coupe, en avant des bords correspondants des branches du torsadeur.

L'entraînement de l'arbre 28, équipé du torsadeur et du dispositif de coupe, est réalisé à partir d'un second moteur électrique 35, par l'intermédiaire de deux couples d'engrenage droits 36, 37. L'appareil est équipé d'une carte 38 portant trois capteurs à effet Hall désignés respectivement par les références 39, 40 et 42. La roue 15 est équipée d'un aimant dont la trajectoire de déplacement passe devant les capteurs 39 et 40, tandis que l'engrenage 36 est équipé d'un aimant, dont la trajectoire de déplacement passe devant le capteur 42.

Le capteur 40 commande, lors du passage de l'aimant associé à la roue 15, l'arrêt du premier moteur 4 et la mise en fonctionnement du second moteur 35, après fermeture du bec 3. Le second capteur 39 commande l'arrêt du premier moteur 4 en fin du mouvement d'ouverture du bec 3. Le troisième capteur 42 commande, en fin d'opération de torsadage, l'arrêt du second moteur 35 et la mise en fonctionnement du premier moteur 4. Il doit être noté que, dans le fonctionnement de l'appareil, les deux moteurs 4 et 35 tournent toujours dans le même sens.

L'appareil est équipé d'un sélecteur, non représenté au dessin, permettant de régler le nombre de tours du torsadeur au cours d'une opération, préalablement à une opération de torsadage.

Enfin, et comme montré schématiquement à la figure 6, l'appareil est équipé d'une double gaine 43 assurant, d'une part, l'amenée du fil 6 et, d'autre part, l'amenée de l'alimentation électrique 44.

Le fonctionnement de l'appareil est le suivant. En fonction du type d'objet à attacher, l'opérateur sélectionne le nombre de tours de torsadage. Comme montré aux figures 5 et 6, l'opérateur engage le bec en position ouverte autour de l'objet 45 à attacher sur un support 46. La gâchette de commande du cycle, non représentée au dessin, est actionnée. La carte électronique 5 fournit une impulsion au moteur 4 qui entre en fonctionnement. Le moteur entraîne l'arbre 12 et, par suite, la roue 15 et le galet d'entraînement 22.

La came 16 libère la bielle 17, jusque là retenue, ce qui assure la fermeture du bec 3 par déplacement de la partie mobile 8 relativement à la partie fixe 7.

Le galet d'entraînement 22 du fil tourne et fait avancer le fil dans le bec 3, jusqu'à l'engager dans le torsadeur 29.

Le moteur 4 tourne jusqu'à ce que l'aimant de la roue 15 vienne se positionner en regard du capteur 40. Le capteur informe la carte 5 que le moteur 4 doit être arrêté et que le moteur 35 doit être mis en fonctionnement.

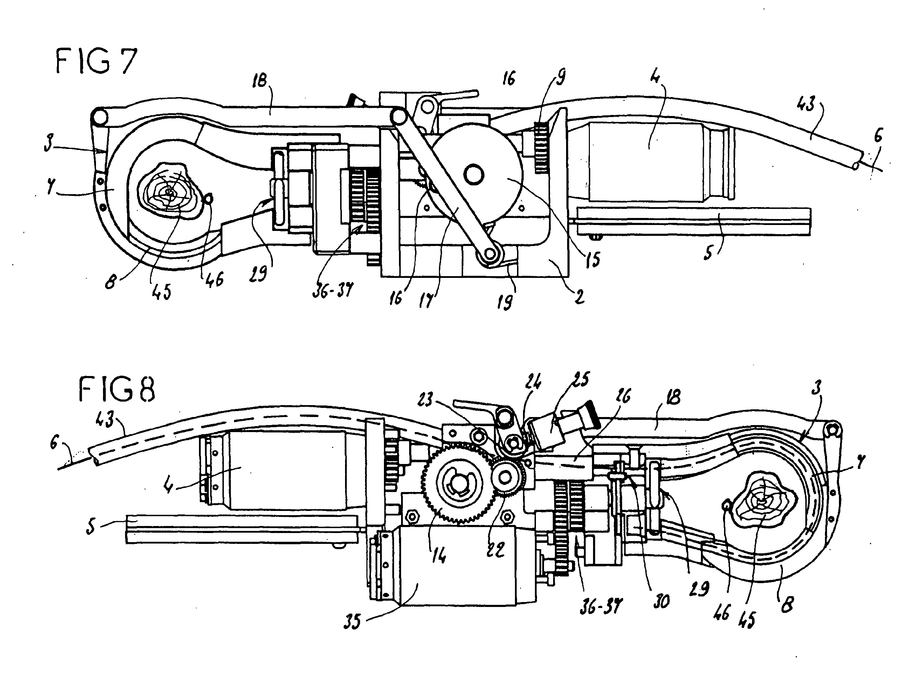

L'appareil se trouve alors dans la position représentée aux figures 7 et 8.

Le moteur 35 entraîne l'arbre 28 portant le torsadeur 29 et la lame de coupe 30.

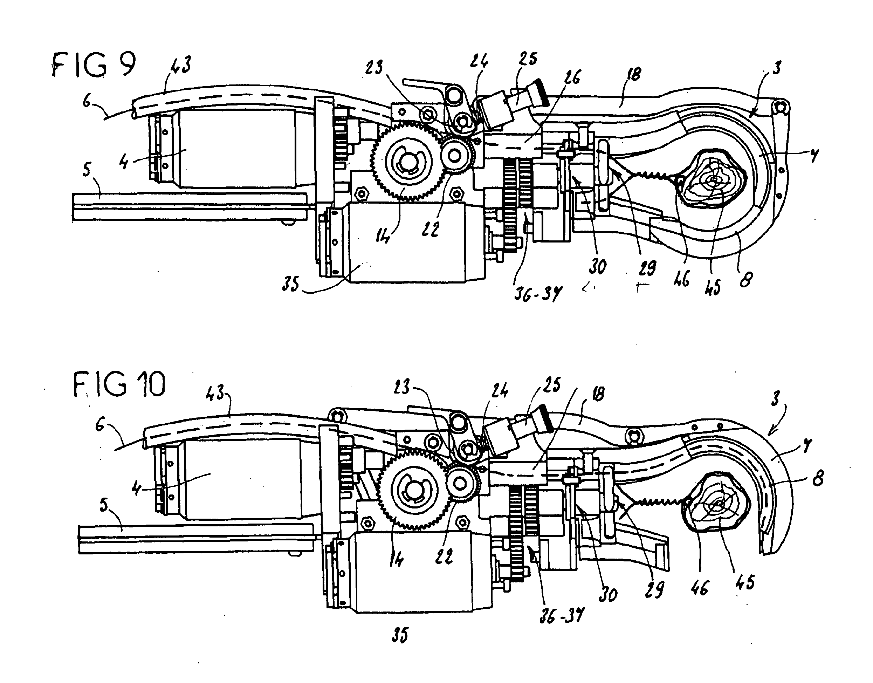

La lame de coupe 30 vient, en coopération avec un contre-couteau, sectionner le fil, puis les ailes 32 du torsadeur accrochent les deux brins du fil pour effectuer la torsade, comme montré à la figure 9.

Le torsadeur décrit le nombre de tours défini par l'utilisateur à l'aide du sélecteur. Lorsque le capteur 42 a compté le nombre de tours prédéterminés par passage de l'aimant fixé sur le pignon 36, il arrête le moteur 35 tout en assurant un positionnement précis du torsadeur et du dispositif de coupe en vue du démarrage du cycle suivant. L'information fournie à la carte électronique 5 assure également la mise en fonctionnement du moteur 4, toujours dans le même sens, la roue 15 assurant par l'intermédiaire de la came 16 l'entraînement de la bielle 17 dans un sens d'ouverture du bec 3, comme montré à la figure 10. Ce mouvement de rotation de la roue 15 est stoppé lorsque l'aimant que comporte celle-ci arrive en regard du capteur 39. Il faut noter qu'au cours de ce mouvement d'ouverture du bec, le fil est entraîné par le galet d'entraînement 22, jusqu'à arriver, lorsque le moteur 4 stoppe son mouvement, à l'extrémité du bec 3.

L'appareil est alors prêt pour un autre cycle.

Il est possible d'intervenir sur l'appareil dans le cas où le fil ne passerait plus dans le canal de guidage 26. Cette intervention est effectuée par l'intermédiaire de la trappe 27 prévue à cet effet.

Comme il ressort de ce qui précède, l'invention apporte une grande amélioration à la technique existante en fournissant un appareil de structure simple et fiable, et présentant une grande commodité d'utilisation pour l'opérateur.

## Revendications

1. Appareil pour la pose automatique de liens torsadés du type comportant un corps (2) équipé de moyens d'alimentation en fil continu (6), et d'amenée de ce fil à un bec courbe (3) pouvant être refermé sur lui-même pour entourer l'objet (45) ou similaire autour duquel le lien doit être torsadé, le corps étant équipé d'un torsadeur (29) entraîné en rotation au cours de l'opération de torsade et d'un dispositif de coupe (30) du fil pour former un lien, cet appareil comportant un premier moteur (4) destiné à réaliser l'entraînement du fil (6) ainsi que la fermeture et l'ouverture du bec de guidage (3) et un second moteur (35) destiné à actionner le torsadeur (29), **caractérisé en ce que** le second moteur (35) est également destiné à entraîner le dispositif de coupe (30) du fil, des moyens de commande étant prévus pour successivement commander l'entraînement du fil (6) et la fermeture du bec (3) de guidage de celui-ci par l'intermédiaire du premier moteur (4), puis, le premier moteur (4) étant arrêté, l'entraînement simultané du dispositif de coupe (30) du fil et du torsadeur (29) à l'aide du second moteur (35), et enfin, après arrêt du second moteur (35), l'ouverture du bec (3) de guidage et l'amenée de fil à ce dernier.

2. Appareil selon la revendication 1, **caractérisé en ce que** le bec (3) de guidage du fil comprend une première partie (7) fixe et solidaire du corps (2) formant un crochet ouvert se terminant par une zone en forme d'arc de cercle dans laquelle est montée, de façon coulissante et guidée, une seconde partie (8) déplaçable entre une première position dans laquelle la seconde partie (8) est escamotée dans la première partie (7) du bec (3), correspondant à une position d'ouverture de celui-ci, et une seconde position dans laquelle la seconde partie (8) prolonge la première partie (7) du bec pour former une boucle fermée encerclant l'objet (45) ou similaire autour duquel le fil doit être torsadé, une gorge étant ménagée sur la face intérieure des première (7) et seconde (8) parties du bec pour assurer le guidage du fil (6) jusqu'au torsadeur (29), après formation d'une boucle.

3. Appareil selon la revendication 2, **caractérisé en ce qu'**à l'extrémité de la seconde partie (8) du bec (3) demeurant guidée dans la première partie (7) du bec (3), en position fermée de celui-ci, est articulée une extrémité d'une première bielle disposée longitudinalement au corps de l'appareil, et dont l'autre extrémité est articulée sur une seconde bielle (17) également articulée sur le corps et soumise à l'action d'un ressort (19), tendant à la faire pivoter et à déplacer la première bielle (18) dans un sens de fermeture du bec.

4. Appareil selon la revendication 3, **caractérisé en ce que**, sur le corps (2) est montée pivotante autour d'un axe parallèle à l'axe d'articulation de la seconde bielle (17) sur le corps, une roue (15) qui, entraînée en rotation par le premier moteur, est équipée sur l'une de ses faces, d'une came (16) prenant appui contre la seconde bielle (17) pour commander le pivotement de celle-ci et par suite les mouvements d'ouverture et de fermeture du bec (3).

5. Appareil selon la revendication 4, **caractérisé en ce que**, sur la roue (15) est calé un pignon (14) d'entraînement en rotation à partir d'un moteur électrique qui entraîne également un pignon (20) sur lequel est calé un galet (22) d'entraînement du fil (6), le fil passant entre le galet d'entraînement (22) et un galet (23) d'axe parallèle, libre en rotation et soumis à l'action d'un ressort (24) de compression, jouant le rôle de galet presseur.

6. Appareil selon la revendication 5, **caractérisé en ce que**, sur l'extrémité du corps (2) opposée à celle équipée du bec (3), est monté axialement un premier moteur électrique (4) dont l'arbre de sortie entraîne, par un couple d'engrenages droits (9, 10), un arbre longitudinal (12) équipé d'une vis sans fin (13) engrenant avec un pignon (14) calé sur la roue (15).

7. Appareil selon l'une des revendications 1 à 6, **caractérisé en ce que**, sur la partie du corps (2) située du côté du bec (3), est monté pivotant autour d'un axe orienté dans l'axe du corps, c'est-à-dire perpendiculaire à l'ouverture du bec, un arbre (28) sur lequel sont calés le torsadeur (29) et un dispositif de coupe (30), le torsadeur (29) étant situé du côté du bec et le dispositif de coupe (30) étant situé du côté de l'intérieur du corps.

8. Appareil selon la revendication 7, **caractérisé en ce que** le torsadeur (29) est constitué par deux branches (32) cintrées et opposées en forme d'hélice et le dispositif de coupe est formé par deux lames (33) diamétralement opposées, dont les arêtes de coupe (34) sont situées, dans le sens de rotation du torsadeur (29) et du dispositif de coupe (30), en avant des bords correspondants des branches (32) du torsadeur.

9. Appareil selon l'une des revendications 1 à 8, **caractérisé en ce que** le second moteur électrique (35) est monté sur le corps (2), dans la zone centrale de celui-ci et entraîne le torsadeur (29) et le dispositif de coupe (30) par deux couples d'engrenages droits (36, 37).

10. Appareil selon l'ensemble des revendications 1 à 9, **caractérisé en ce qu'**il possède une carte électronique (5) de commande des moteurs électriques (4, 35) recevant des informations de trois capteurs à effet Hall (39, 40, 42) dont deux (39, 40) sont actionnés par un aimant fixé sur la roue (15) équipée d'une came (16) et commandent respectivement l'arrêt du premier moteur (4) et la mise en fonctionnement du second moteur (35) après fermeture du bec (3) et l'arrêt du premier moteur (4) en fin du mouvement d'ouverture du bec (3), et dont le troisième (42) est actionné par un aimant fixé sur un engrenage (36) d'entraînement de l'arbre (28) du torsadeur (29) et du dispositif de coupe (30) et commande, en fin d'opération de torsadage, l'arrêt du second moteur (35) et la mise en fonctionnement du premier moteur (4).

11. Appareil selon la revendication 10, **caractérisé en ce qu'**il comporte un sélecteur déterminant le nombre de tours du torsadeur au cours d'une opération de torsadage.

12. Appareil selon l'ensemble des revendications 1 à 11, **caractérisé en ce qu'**il possède une forme générale allongée et se présente sous la forme d'un bâton.

13. Appareil selon l'une des revendications 1 à 12, **caractérisé en ce qu'**il comprend une double gaine (43) d'amenée du fil de liage (6) et de l'énergie électrique (44) pour les moteurs.

14. Appareil selon l'une des revendications 1 à 13, **caractérisé en ce qu'**il comprend un dispositif de reconnaissance du fil utilisé, empêchant le fonctionnement de l'appareil si le fil n'est pas reconnu comme compatible avec le fonctionnement de l'appareil.

## Claims

1. An apparatus for automatically setting up twisted ties of the type including a body (2) equipped with means for supplying continuous wire (6), and for bringing this wire to a curved nose (3) which may be closed on itself in order to surround the object (45) or the like around which the tie has to be twisted, the body being equipped with a twister (29) driven into rotation during the twisting operation and with a device (30) for cutting the wire in order to form a tie, this apparatus including a first motor (4) intended to perform driving of the wire (6) as well as closing and opening of the guiding nose (3) and a second motor (35) intended to actuate the twister (29), **characterized in that** the second motor (35) is also intended to drive the device (30) for cutting the wire, control means being provided in order to successively control the driving of the wire (6) and the closing of the guiding nose (3) by the latter via the first motor (4), and then, the first motor (4) being stopped, simultaneously driving the device (30) for cutting the wire and the twister (29) by means of the second motor (35), and finally, after stopping the second motor (35), opening the guiding nose (3) and bringing wire to the latter.

2. The apparatus according to claim 1, **characterized in that** the nose (3) for guiding the wire comprises a first fixed portion (7) and firmly attached to the body (2) forming an open hook ending with an area having the shape of a circular arc in which a second portion (8) is slidably and guidably mounted, which may be moved between a first position in which the second portion (8) is retracted into the first portion (7) of the nose (3), corresponding to a position for opening the latter, and a second position in which the second portion (8) extends the first portion (7) of the nose (3) in order to form a closed loop encircling the object (45) or the like around which the wire has to be twisted, a groove being made on the inner face of the first (7) and second (8) portions of the nose in order to ensure guiding of the wire (6) as far as the twister (29) after forming a loop.

3. The apparatus according to claim 2, **characterized in that** at the end of the second portion (8) of the nose (3) remaining guided in the first portion (7) of the nose (3), in the closed position of the latter, an end of a first connecting rod positioned longitudinally to the body of the apparatus is jointed, and the other end of which is jointed on a second connecting rod (17) also jointed on the body and subject to the action of a spring (19), tending to cause it to pivot and to displace the first connecting rod (18) in a direction for closing the nose.

4. The apparatus according to claim 3, **characterized in that**, on the body (2), a wheel (15) is pivotally mounted around an axis parallel to the jointing axis of the second connecting rod (17) on the body, which wheel driven into rotation by the first motor, is equipped on one of its faces, with a cam (16) bearing against the second connecting rod (17) in order to control the pivoting of the latter, and subsequently the movements for opening and closing the nose (3).

5. The apparatus according to claim 4, **characterized in that**, on the wheel (15), a cog (14) is keyed, driven into rotation by an electric motor which also drives a cog (20) on which a roller (22) is keyed for driving the wire (6), the wire passing between the driving roller (22) and a freely rotating roller (23) with a parallel axis and subject to the action of a compression spring (24), playing the role of a pressure roller.

6. The apparatus according to claim 5, **characterized in that**, on the end of the body (2), opposite to the one equipped with the nose (3), a first electric motor (4) is axially mounted, the output shaft of which drives through a pair of spur gears (9, 10), a longitudinal shaft (12) equipped with a worm screw (13) meshing with a keyed cog (4) on the wheel (15).

7. The apparatus according to one of claims 1 to 6, **characterized in that**, on the portion of the body (2) located on the side of the nose (3), is pivotally mounted around an axis oriented in the axis of the body, i.e. perpendicular to the opening of the nose, a shaft (28) on the which the twister (29) and a cutting device (30) are keyed, the twister (29) being located on the side of the nose and the cutting device (30) being located on the side of the interior of the body.

8. The apparatus according to claim 7, **characterized in that** the twister (29) is formed with two bent and opposite branches (32) of helical shape and the coupling device is formed with two diametrically opposite blades (33), the cutting edges (34) of which are located, in the direction of rotation of the twister (29) and of the cutting device (30), in front of the corresponding edges of the branches (32) of the twister.

9. The apparatus according to one of claims 1 to 8, **characterized in that** the second electric motor (35) is mounted on the body (2), in the central area of the latter, and drives the twister (29) and the cutting device (30) by two pairs of spur gears (36, 37).

10. The apparatus according to the whole of claims 1 to 9, **characterized in that** it has an electronic board (5) for controlling the electric motors (4, 35) receiving information from three Hall effect sensors (39, 40, 42), two of which (39, 40) are actuated by a magnet attached on the wheel (15) equipped with a cam (16) and respectively controlling the stopping of the first motor (4) and the setting into operation of the second motor (35) after closing the nose (3) and the stopping of the first motor (4) at the end of the opening movement of the nose (3), and the third (42) of which is actuated by a magnet attached on a gear (36) for driving the shaft (28) of the twister (29) and of the cutting device (30), and controls at the end of the twisting operation, the stopping of the second motor (35) and the setting into operation of the first motor (4).

11. The apparatus according to claim 10, **characterized in that** it includes a selector determining the number of terms of the twister during a twisting operation.

12. The apparatus according to the whole of claims 1 to 11, **characterized in that** it has a general elongated shape and appears as a stick.

13. The apparatus according to one of claims 1 to 12, **characterized in that** it comprises a double sheath (43) for bringing the binding wire (6), and the electric energy (44) for the motors.

14. The apparatus according to one of claims 1 to 13, **characterized in that** it comprises a device for recognizing the wire used, preventing operation of the apparatus if the wire is not recognized as compatible with the operation of the apparatus.

## Patentansprüche

1. Apparat für das automatische Anbringen von gewickelten Verbindungen der Bauart, der einen Körper (2) aufweist, der mit Mitteln zur Versorgung mit einem ununterbrochenen Draht (6) und Zufuhrmitteln dieses Drahts zu einem gebogenen Schnabel (3) ausgestattet ist, der um sich selbst schließbar ist, um das Objekt (45) oder ähnliches, um das die Verbindung gewickelt werden soll, zu umschließen, wobei der Körper mit einem Wickler (29) ausgestattet ist, der während des Wickelvorgangs rotierend angetrieben wird, und mit einer Schneidevorrichtung (30) des Drahts, um eine Verbindung zu bilden, wobei dieser Apparat einen ersten Motor (4) aufweist, der dazu bestimmt ist, den Antrieb des Drahts (6) zu gewährleisten sowie das Schließen und Öffnen des Führungsschnabels (3), und einen zweiten Motor (35), der dazu bestimmt ist, den Wickler (29) zu betätigen, **dadurch gekennzeichnet, dass** der zweite Motor (35) ebenfalls dazu bestimmt ist, die Schneidevorrichtung (30) des Drahts anzutreiben, wobei Steuermittel vorgesehen sind, um aufeinanderfolgend den Antrieb des Drahts (6) und das Schließen des Führungsschnabels (3) desselben mit dem ersten Motor (4), und dann, wenn der erste Motor (4) gestoppt ist, den gleichzeitigen Antrieb der Schneidevorrichtung (30) des Drahts und des Wicklers (29) mit Hilfe des zweiten Motors (35) und schließlich, nach dem Stopp des zweiten Motors (35), das Öffnen des Führungsschnabels (3) und die Zufuhr des Drahts zu diesem zu steuern.

2. Apparat nach Anspruch 1, **dadurch gekennzeichnet, dass** der Führungsschnabel (3) des Drahts einen ersten starren und mit dem Körper (2) verbundene Abschnitt (7) umfasst, der einen offenen Haken bildet, der in einer kreisbogenförmigen Zone endet, in der gleitend und geführt ein zweiter Abschnitt (8) angebracht ist, der zwischen einer ersten Stellung, in der der zweite Abschnitt (8) in den ersten Abschnitt (7) des Schnabels (3) eingefahren ist, was einer geöffneten Stellung desselben entspricht, und einer zweiten Stellung, in der der zweite Abschnitt (8) den ersten Abschnitt (7) des Schnabels verlängert, um einen geschlossenen Kreis zu bilden, der das Objekt (45) oder ähnliches umschließt, um das der Draht gewickelt sein muss, verschiebbar ist, wobei auf der Innenseite des ersten (7) und zweiten (8) Abschnitts des Schnabels eine Rille eingearbeitet ist, um die Führung des Drahts (6) bis zum Wickler (29) nach Bildung einer Schlaufe sicherzustellen.

3. Apparat nach Anspruch 2, **dadurch gekennzeichnet, dass** am Ende des zweiten Abschnitts (8) des Schnabels (3), der in geschlossener Stellung desselben im ersten Abschnitt (7) des Schnabels (3) geführt bleibt, ein Ende einer ersten Stange angelenkt ist, die längs zum Körper des Apparats angeordnet ist, und deren anderes Ende auf einer zweiten Stange (17) angelenkt ist, die ebenfalls auf dem Körper angelenkt ist und der Wirkung einer Feder (19) unterworfen ist, die dazu tendiert, sie zu schwenken und die erste Stange (18) in eine Verschlussrichtung des Schnabels zu verschieben.

4. Apparat nach Anspruch 3, **dadurch gekennzeichnet, dass** auf dem Körper (2) schwenkend um eine Achse parallel zur Gelenkachse der zweiten Stange (17) auf dem Körper ein Rad (15) montiert ist, das, rotierend von dem ersten Motor angetrieben, auf einer seiner Seiten mit einem Vorsprung (16) ausgestattet ist, der sich auf der zweiten Stange (17) abstützt, um das Schwenken derselben zu und in der Folge die Öffnungs- und Verschlussbewegungen des Schnabels (3) steuern.

5. Apparat nach Anspruch 4, **dadurch gekennzeichnet, dass** auf dem Rad (15) ein Zahnrad (14) befestigt ist, das von einem Elektromotor rotierend angetrieben wird, wobei ebenfalls ein Zahnrad (20) angetrieben wird, auf dem eine Antriebsrolle (22) des Drahts (6) befestigt ist, wobei der Draht zwischen der Antriebsrolle (22) und einer Rolle (23) mit paralleler Achse verläuft, die frei dreht und der Wirkung einer Druckfeder (24) ausgesetzt ist, die die Aufgabe einer Andruckrolle erfüllt.

6. Apparat nach Anspruch 5, **dadurch gekennzeichnet, dass** auf dem Ende des Körpers (2), das dem Ende, das mit dem Schnabel (3) ausgestattet ist, gegenüberliegt, axial ein erster Elektromotor (4) montiert ist, dessen Ausgangswelle über ein gerades Zahnradpaar (9, 10) eine Längswelle (12) antreibt, die mit einer Schnecke (13) ausgestattet ist, die in ein auf dem Rad (15) befestigtes Zahnrad (14) eingreift.

7. Apparat nach einem der Ansprüche 1 bis 6, **dadurch gekennzeichnet, dass** auf dem Abschnitt des Körpers (2), der sich auf der Seite des Schnabels (3) befindet, eine Welle (28) drehbar montiert ist, die um eine Achse, die in der Achse des Körpers ausgerichtet ist, das heißt senkrecht zur Schnabelöffnung, ausgerichtet ist, auf der der Wickler (29) und eine Schneidevorrichtung (30) befestigt sind, wobei sich der Wickler (29) auf der Seite des Schnabels befindet und sich die Schneidevorrichtung (30) auf der Innenseite des Körpers befindet.

8. Apparat nach Anspruch 7, **dadurch gekennzeichnet, dass** der Wickler (29) von zwei gebogenen und schraubenförmig gegenüberliegenden Armen (32) gebildet wird und die Schneidevorrichtung von zwei diametral gegenüberliegenden Klingen (33) gebildet wird, deren Schneiden (34) in Drehrichtung des Wicklers (29) und der Schneidevorrichtung (30) vor den entsprechenden Armen (32) des Wicklers liegen.

9. Apparat nach einem der Ansprüche 1 bis 8, **dadurch gekennzeichnet, dass** der zweite Elektromotor (35) auf dem Körper (2) in der zentralen Zone desselben montiert ist und den Wickler (29) und die Schneidevorrichtung (30) durch zwei gerade Zahnradpaare (36, 37) antreibt.

10. Apparat nach der Gruppe der Ansprüche 1 bis 9, **dadurch gekennzeichnet, dass** er eine elektronische Steuerkarte (5) der Elektromotoren (4, 35) besitzt, die Informationen von drei Sensoren mit Hall-Effekt (39, 40, 42) erhalten, von denen zwei (39, 40) von einem auf dem Rad (15) befestigten Magneten betätigt werden, das mit einem Vorsprung (16) ausgestattet ist, und jeweils den Stopp des ersten Motors (4) und die Inbetriebnahme des zweiten Motors (35) nach dem Schließen des Schnabels (3) und dem Stopp des ersten Motors (4) am Ende der Öffnungsbewegung des Schnabels (3) steuern, und deren dritter (42) von einem Magneten betätigt wird, der auf einem Antriebszahnrad (36) der Welle (28) des Wicklers (29) und der Schneidevorrichtung (30) befestigt ist und am Ende des Wickelvorgangs den Stopp des zweiten Motors (35) und die Inbetriebnahme des ersten Motors (4) steuert.

11. Apparat nach Anspruch 10, **dadurch gekennzeichnet, dass** er einen Selektor aufweist, der die Anzahl der Umdrehungen des Wicklers während eines Wickelvorgangs bestimmt.

12. Apparat nach der Gruppe der Ansprüche 1 bis 11, **dadurch gekennzeichnet, dass** er eine allgemein längliche Form besitzt und sich in Form eines Stabs darstellt.

13. Apparat nach einem der Ansprüche 1 bis 12, **dadurch gekennzeichnet, dass** er eine doppelte Zufuhrhülle (43) des Bindedrahts (6) und der elektrischen Energie (44) für die Motoren umfasst.

14. Apparat nach einem der Ansprüche 1 bis 13, **dadurch gekennzeichnet, dass** er eine Vorrichtung zur Erkennung des verwendeten Drahts umfasst, die den Betrieb des Apparats verhindert, wenn der Draht nicht als mit der Funktion des Apparat kompatibel erkannt wird.
